# EUROPÄISCHE PATENTSCHRIFT

(11) **EP 3 648 642 B1**
(45) Veröffentlichungstag und Bekanntmachung des Hinweises auf die Patenterteilung: **18.10.2023**
(21) Anmeldenummer: 18732278.9
(22) Anmeldetag: 08.06.2018
(51) Int. Cl.: A47J 31/44, A47J 31/60, A47J 31/46

(54) **MILCHMODUL ZUR ERZEUGUNG VON MILCHSCHAUM ODER MILCHGETRÄNKEN, VORZUGSWEISE ZUM EINBAU IN EINE KAFFEEMASCHINE**
MILK MODULE FOR GENERATING MILK FOAM OR MILK BEVERAGES, PREFERABLY FOR INSTALLING INTO A COFFEE MACHINE
MODULE LAIT DESTINÉ À PRODUIRE DE LA MOUSSE DE LAIT OU DES BOISSONS LACTÉES, DE PRÉFÉRENCE DESTINÉ À UNE INSTALLATION DANS UNE MACHINE À CAFÉ

(30) Priorität: 06.07.2017 CH 8752017
(43) Veröffentlichungstag der Anmeldung: 13.05.2020
(73) Patentinhaber: Steiner AG Weggis, 6353 Weggis (CH)
(72) Erfinder: STEINER, Adrian, 6353 Weggis (CH)
(74) Vertreter: Luchs, Willi
(86) Internationale Anmeldenummer: PCT/EP2018/065123
(87) Internationale Veröffentlichungsnummer: WO 2019/007629

(56) Entgegenhaltungen:
- EP-A1- 2 272 409
- WO-A1-2009/004089
- WO-A1-2016/046237
- CH-A2- 705 198
- DE-T2- 60 310 313
- DE-T2- 60 312 165
- DE-U1-212015 000 049
- US-A1- 2011 311 694
- US-A1- 2015 335 196
- Colus Mibia: "Waeco MF-5M-230 Milchkühlschrank 5 Liter / silber: Original Item", Youtube, 5. April 2016 (2016-04-05), Seite 2 pp., XP054978755, Gefunden im Internet: URL:https://www.youtube.com/watch?v=V91yYQ NTZ7U [gefunden am 2018-10-05]

## Beschreibung

Die Erfindung betrifft ein Milchmodul zur Erzeugung von Milchschaum oder Milchgetränken, vorzugsweise zum Einbau in eine Kaffeemaschine nach dem Oberbegriff des Anspruchs 1.

Kaffeemaschinen mit integrierten Modulen für die Erzeugung von Milchschaum bzw. zum Aufheizen von Milch werden bekanntlich in mannigfaltigen Ausführungen gebaut. Sie ermöglichen die automatische Erzeugung sowohl von Kaffee, wie Espresso, als auch von Mischgetränken aus Kaffee mit Milch oder Milchschaum, insbesondere Cappuccino.

Kaffeemaschinen sind üblicherweise mit einer Reinigungseinrichtung versehen, welche im Betrieb eine periodische Reinigung der Maschine selbsttätig bewerkstelligt. Bei kleinbauenden Kaffeemaschinen ist es für den konstruktiven Aufbau schwierig, eine solche Reinigungseinrichtung vorzusehen, weil bei dem beanspruchten Raumbedarf Grenzen gesetzt sind.

In der Druckschrift WO 2009/004089 ist eine Vorrichtung zur Ausgabe auf Milch basierenden Getränken offenbart, bei der mittels einer Pumpe eine dosierte Menge Milch von einem in einem kühlbaren Schrank befindlichen Milchbehälter angesaugt und dabei durch ein Zuführmittel mindestens ein Aromastoff zugeführt, mit der Milch vermischt und zu einem Milchauslass befördert wird. Es kann ausserdem durch eine Emulgiervorrichtung aufgeschäumte Milch erzeugt werden, indem in diese Milch von der Pumpe via eine abgezweigte Leitung erhitzter Wasserdampf durch eine Leitung und Luft durch eine Luftleitung zugemischt wird, wobei diese Einrichtung in der Kaffeemaschine integriert ist und damit nicht ein unabhängiges Milchmodul vorgesehen ist. Ausserdem ist eine Leitungsverzweigung in der vom Milchbehälter ausgehenden Schlauchleitung angeordnet, in die ein Reinigungsmittel zuführbar ist.

In der Druckschrift EP 2 272 409 ist eine Vorrichtung zum Aufschäumen und/oder Erwärmen von Milch vorgesehen, die über einen Milchansaugschlauch an einen Milchbehälter angeschlossen ist. Eine Reinigungsvorrichtung enthält ein von einem Spülfluidausgang abgebbares Spülfluid und weist ein Umschaltventil auf, welches in eine Spülstellung umschaltbar ist. Es erfolgt eine Spülfluidverbindung zwischen dem Spülfluidausgang und der Vorrichtung zum Aufschäumen von Milch über einen Spülschlauch und dabei der Milchansaugschlauch zum Spülen freigeschaltet ist. Zwischen dem Spülfluidausgang und dem Umschaltventil ist ein Reinigungsbehälter angeordnet, welcher ein Reinigungsmittel beinhaltet.

Im Dokument US 2015/335196 ist eine separate Vorrichtung zur Erzeugung von Milchschaum mit einem Milchbehälter offenbart, die neben eine Kaffeemaschine aufstellbar ist und durch einen aussenliegenden Schlauch zur Auslasshülse des Kaffees geführt und dort angeschlossen wird. Zudem ist diese Vorrichtung nicht mit einer Einrichtung zur Dampferzeugung versehen, sondern der Dampf wird via eine Leitung von der Kaffeemaschine zugeführt.

Der Erfindung liegt die Aufgabe zugrunde, diese Nachteile zu vermeiden und eine Kaffeemaschine der eingangs genannten Art zu schaffen, die bei einfachem Aufbau und leichter Handhabung die obengenannten Funktionen mit möglichst reduziertem Raumbedarf ausführen kann.

Diese Aufgabe wird erfindungsgemäss nach den Merkmalen des Anspruchs 1 bzw. des Anspruchs 4 gelöst.

Durch die erfindungsgemässe Ausbildung des Milchmoduls als eine unabhängige Einheit mit diesem vorzugsweise als Steckkupplung vorgesehene Verbindungsmittel kann es auf einfache Weise in einem Kaffeemaschinengehäuse montiert und der Milchauslass bei dem Kaffeeauslass bewerkstelligt werden.

Mit der erfindungsgemässen Konstruktion kann eine bet ächtliche Raumeinsparung erzielt werden, weil nach Entfernen des Milchbehälters aus der Kühlschrankbox der von ihm beanspruchte Einbauraum zum Unterbringen des Reinigungsbehälters verfügbar wird, so dass für letzteren kein zusätzlicher Raumbedarf nötig ist.

Die Erfindung sieht ausserdem vor, dass der Milchbehälter bzw. der Reinigungsbehälter an den Arbeitskreislauf der Maschine mittels eines im oberen Bereich der Kühlschrankbox nach vorne bzw. nach hinten schwenkbar gelagerter und nach unten frei hängender Ansaugschlauch vorgesehen ist. Die Schwenkbarkeit des Ansaugschlauchs ermöglicht das selbständige Einführen oder Entfernen desselben aus dem Behälter, ohne dass die Bedienungsperson ihn während des Umtauschvorgangs berühren muss.

Sehr vorteilhaft ist erfindungsgemäss in dem Reinigungsbehälter eine Einrichtung mit einem Wasserzufuhrkanal, einer definierten Öffnung zur Aufnahme eines Reinigungsmittels und einer Auslassöffnung enthalten. Damit kann Wasser durch diesen Zufuhrkanal in diese Öffnung geleitet und darin das Reinigungsmittel aufgelöst, mit dem Wasser emulgiert und der Reinigungsbehälter damit gefüllt werden kann. Dies ermöglicht eine einfache Handhabung für das Reinigen und genaue Dosierung des Reinigungsmittels, wobei dazu insbesondere Reinigungstabletten verwendet werden sollen.

Die Erfindung ist nachfolgend anhand eines Ausführungsbeispiels unter Bezugnahme auf die Zeichnung näher erläutert. Es zeigen:
- Fig. 1: eine perspektivisch dargestellte Kaffeemaschine mit dem Milchmodul, wobei das Kaffeemodul nicht gezeigt ist;
- Fig. 2: eine perspektivische Seitenansicht des Milchmoduls nach Fig. 1;
- Fig. 3: einen Schnitt der Steckkupplung auf der Oberseite des Milchmoduls;
- Fig. 4: die Kühlschrankbox des Milchmoduls nach Fig. 2 vor dem Einführen eines Behälters;
- Fig. 5: die Kühlschrankbox des Milchmoduls nach Fig. 2 beim Einführen des Milchbehälters;
- Fig. 6: eine perspektivische Ansicht eines Reinigungsbehälters für das Milchmodul nach Fig. 2; und
- Fig. 7: ein Schema des hydraulischen Kreislaufs des Milchmoduls nach Fig. 2.

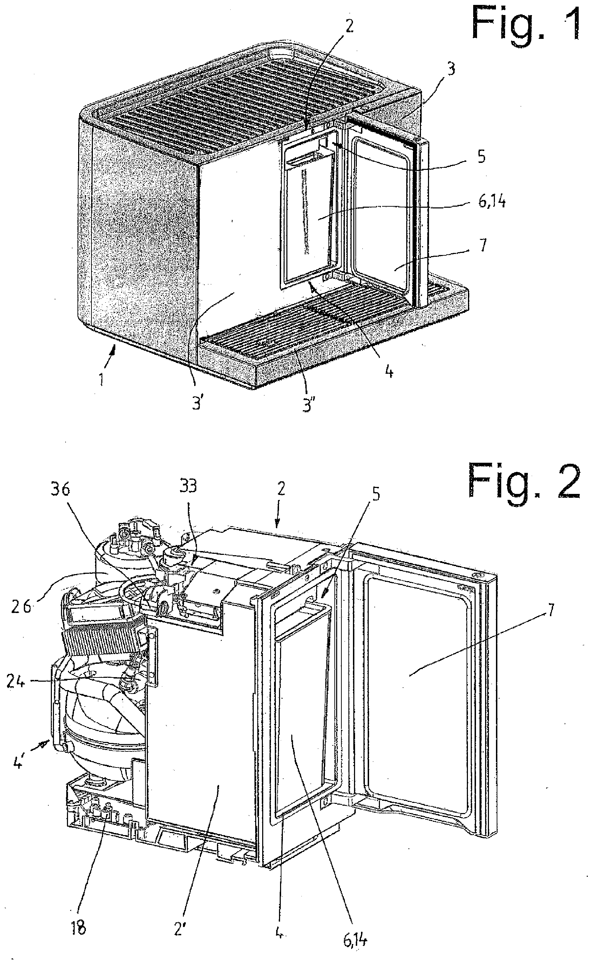

Die in Fig. 1 gezeigte Kaffeemaschine 1 mit einem Gehäuse 3 dient zur automatischen Erzeugung von Kaffee oder kaffeehaltigen Getränken sowie von Mischgetränken aus Kaffee mit Milch oder Milchschaum. Sie besteht aus einem Kaffeemodul zur Erzeugung von Kaffee, von dem nur gerade die Öffnungen 3' in dem Gehäuse 3 zum Einbau desselben veranschaulicht sind, und einem Milchmodul 2 zur Aufbereitung von Milch oder Milchschaum, die unabhängig voneinander in dem gemeinsamen Gehäuse 3 nebeneinander platzsparend einbaubar sind. Das Kaffeemodul 1 besteht an sich aus herkömmlichen Komponenten und ist nicht näher erläutert. Es ist einzig eine Abtropfschale 3" vorderseitig beim Gehäuse 3 gezeigt, auf welche eine Tasse oder dergleichen für das Einfüllen von Kaffee und/oder Milch bzw. Milchschaum stellbar ist.

Das in dem Gehäuse 3 einbaubare Milchmodul 2 ist mit einer Kühlschrankbox 4 ausgestattet, deren Kühlkammer 5 einen Milchbehälter 6 aufnehmen kann. Die optional abschliessbare Kühlkammer 5 ist durch eine an der Vorderseite der Maschine angeordnete Schranktür 7 leicht zugänglich. Dadurch kann nach Öffnen dieser Schranktür 7 der Milchbehälter 6 in die Kühlkammer 5 der Kühlschrankbox 4 hineingestellt oder von ihr entfernt werden. Die Kühlkammer 5 ist so ausgebildet, dass der Milchbehälter 6 annähernd spielfrei in ihr hineinpasst.

Wie aus Fig. 2 ersichtlich ist, ist das Milchmodul 2 erfindungsgemäss als eine unabhängige Einheit ausgebildet, welches eine mit einem Kühlaggregat 4' verbundene Kühlkammer 5 für die Aufnahme des Milchbehälters 6, eine Förderpumpe, einen Boiler 26 zur Erzeugung des Dampfs, eine Einrichtung 24 zum Erhitzen bzw. zum Erzeugen des Milchschaums sowie ein Verbindungsmittel umfasst, durch welches die erhitzte Milch bzw. der erzeugte Milchschaum durch eine Leitung zum Kaffeeauslass bei der Kaffeemaschine förderbar ist.

Ausserdem sind bei diesem Milchmodul 2 eine elektronische Kontrolleinheit 18, nicht näher erläuterte Leitungen und nicht sichtbare Steckerverbindungen an der Rückseite vorgesehen.

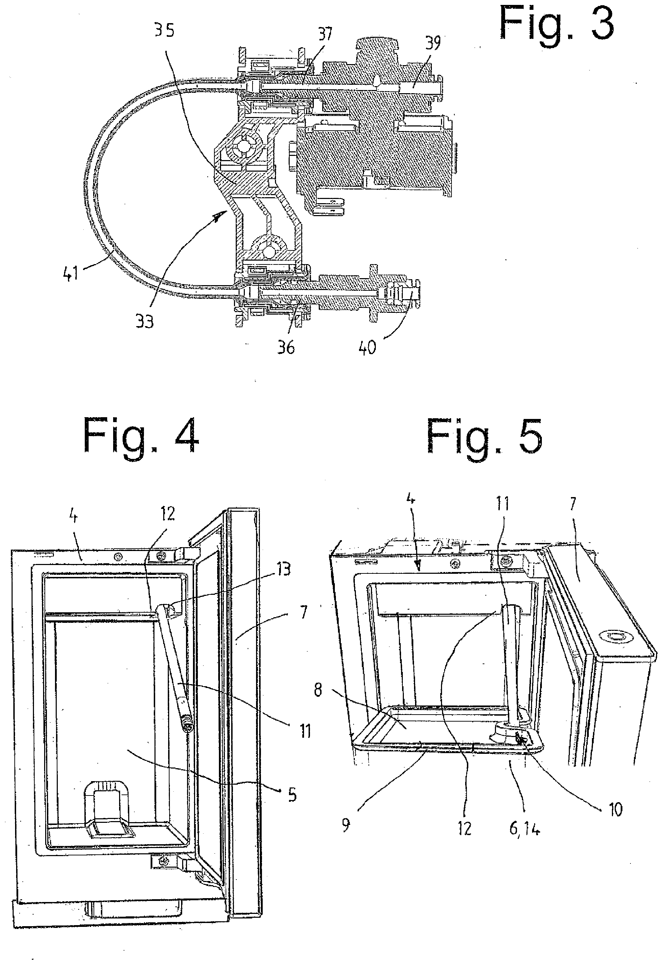

Gemäss Fig. 3 ist das Verbindungsmittel vorteilhaft als eine Steckkupplung 33 mit zwei vorzugsweise achsparallel zueinander angeordneten Steckmuffen 36, 37 gebildet, in welche die Zu- bzw. Ausgangsleitung 39, 40 dichtend und totraumoptimiert einsteckbar sind. Die eine Steckmuffe 36, 37 ist vorstehend zu einem die Kühlschrankbox 4 umgebenden Einschubgehäuse 2' angeordnet, an welche die Ausgangsleitung 40 in der Kaffeemaschine 1 koppelbar ist.

Die Steckkupplung 33 weist ein Verbindungsstück 35 auf, das an beiden Enden mit je einer Steckmuffe 36 bzw. 37 versehen ist, wobei das Verbindungsstück 35 bei dem Gehäuse 3 befestigt ist. Rückseitig sind diese Steckmuffen vorzugsweise mit einem Schlauchbogen 41 verbunden.

Nachdem das Milchmodul in dem Gehäuse 3 eingebaut ist, ist es lediglich erforderlich, die Ausgangsleitung 40 mit der Steckmuffe 36 zu koppeln. Die Steckkupplung 33 zeichnet sich durch einen sehr einfachen Aufbau und eine sichere Handhabung aus. Selbstverständlich können aber hierfür auch andere Kupplungsarten in Frage kommen.

Fig. 4 und Fig. 5 verdeutlichen einen erfindungsgemäss im oberen Bereich der Kühlschrankbox 4 nach vorne bzw. nach hinten schwenkbar gelagerten Ansaugschlauch 11, der frei hängend nach unten ausgerichtet ist,

Der Ansaugschlauch 11 ist durch einen im vorzugsweise oberen Bereich der Kühlschrankbox 4 gelagerten und vorzugsweise manuell betätigbaren Schwenkantrieb 12 drehbar gehalten. Dazu ist bei einer Gelenkstelle 13 des Schwenkantriebs 12 eine Einraststelle vorgesehen, durch diese der Ansaugschlauch 11 bei offenem Kühlschrank nach Entfernen des Milchbehälters 6 aus der Kühlkammer 5 arretiert herausragt. In dieser nach vorne geschwenkten Position 11' kann der Ansaugschlauch von oben in den Milchbehälter 6 bzw. in einen Reinigungsbehälter 14 beim Hineinstellen in die Kühlkammer 5 eingeführt werden, Damit ist dieser Ansaugschlauch platzsparend in der Kühlkammer 5 integriert.

Beim Wiedereinsetzen des Milchbehälters wird der Ansaugschlauch 11 durch die Öffnung 10 des Milchbehälters 4 ohne ihn zu berühren eingeführt. Sobald der Milchbehälter in die Kühlschrankbox 4 hineingestellt ist, ist der Ansaugschlauch wieder nach unten gerichtet, damit er sich mit seinem unteren Ende annähernd bis zum jeweiligen Behälterboden erstreckt. Der Milchbehälter 6 ist ferner durch einen Deckel 8 verschliessbar.

Der Milchbehälter 6 kann im Rahmen der Erfindung durch einen Reinigungsbehälter 14 ausgetauscht werden. Dadurch kann der sonst für den Reinigungsbehälter oder ähnlichem erforderliche zusätzliche Einbauraum eingespart werden und damit ist eine reduzierte Dimensionierung der Kaffeemaschine ermöglicht.

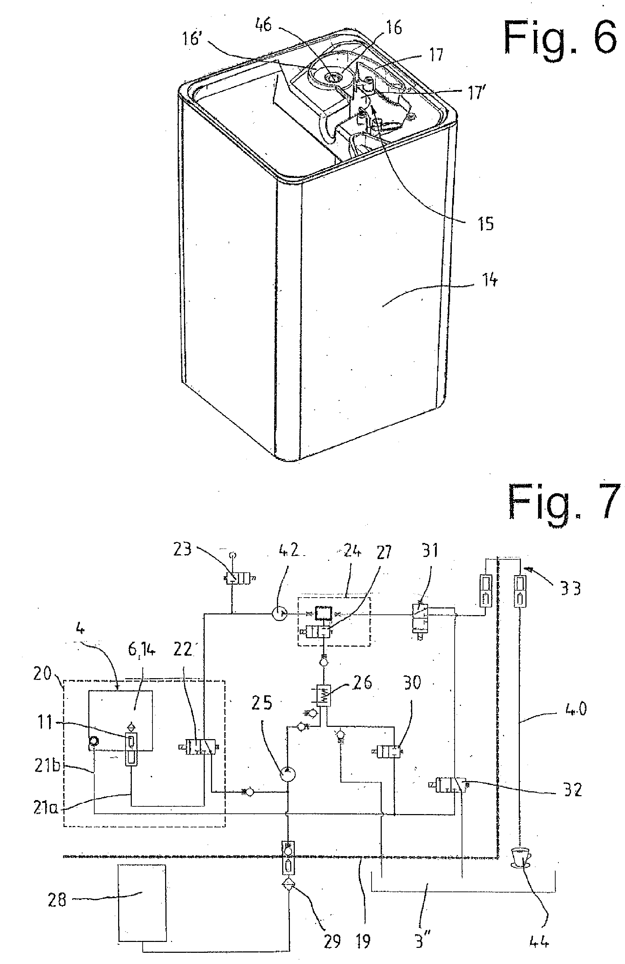

Fig. 6 zeigt einen dafür besonders geeigneten Reinigungsbehälter 14, der vorteilhaft mit derselben Form bzw. Aussenabmessungen wie der Milchbehälter 6 dimensioniert ist. Im Unterschied zu diesem ist aber in diesem Reinigungsbehälter eine Einrichtung 15 mit einem Wasserzufuhrkanal 17, einer definierten Öffnung 16' zur Aufnahme eines Reinigungsmittels und einer Auslassöffnung 17' enthalten.

Zweckmässigerweise ist der im oberen Teil des Behälters angeordnete Wasserzufuhrkanal 17 tangential in diese zylindrisch ausgebildete, von oben zugängliche Öffnung 16' geführt, in welcher zumindest eine Reinigungstablette 16 als lösliches Reinigungsmittels einlegbar ist. Vorzugsweise ist sie ringförmig ausgebildet und mit einer mittleren Bohrung versehen, so dass sie durch den Zentrierstift 46 in der Öffnung 16' annähernd spielfrei positionierbar und detektierbar ist.

Zum Auflösen der Tabletten wird Wasser von der Kühlschrankbox 4 in den Wasserzufuhrkanal 17 tangential auf die Tabletten 16 zugeführt, und das Wasser mit der aufgelösten Tablette läuft durch die Auslassöffnung 17 heraus, sammelt sich im Reinigungsbehälter 14 und wird von dort durch den in den Reinigungsbehälter eingeführten Ansaugschlauch 11 in das Milchmodul geleitet.

Fig. 7 zeigt schematisch den Arbeitskreislauf des Milchmoduls 2, welche durch die gestrichelten Linien 19 abgegrenzt ist. Darin ist die Kühlschrankbox 4 mit dem Milchbehälter 6 bzw. dem Reinigungsbehälter 14 mit gestrichelten Linien 20 verdeutlicht. Für die Milchzufuhr ist der Ansaugschlauch 11 via eine Leitung 21a, ein Zweiwegventil 22, ein Luftansaugventil 23 sowie eine Förderpumpe 42 mit einer Heizkammer der Einrichtung 24 verbunden, wobei letztere für die Dampfzufuhr auch mit dem Boiler 26 und einem Zuschaltventil 27 verbindbar ist. Ein externer Wassertank 28 ist über ein Filter 29 mit dem Boiler 26 via eine Wasserpumpe 25 verbindbar.

Für den periodischen Reinigungsvorgang des Milchmoduls 2 ist der Reinigungsbehälter 14 in die Kühlkammer 5 hineingestellt. Der Ansaugschlauch 11 darin ist an eine Leitung 21b mit den Zweiwegventilen 30 bzw. 32 angeschlossen. Damit können die Heizkammer der Einrichtung 24 und die Förderpumpe 42 mit den zugehörigen Leitungen gespült werden.

Es ist ferner noch die Steckkupplung 33 und die Ausgangsleitung 40 gezeigt, welche zu einer Tasse 44 oder dergleichen auf der Abtropfschale 3" für das Einfüllen von Milch bzw. Milchschaum führt.

Die Erfindung ist mit dem oben erläuterten Ausführungsbeispiel ausreichend dargetan. Sie könnte aber selbstverständlich noch durch andere Varianten offenbart sein. Im Prinzip könnte auch beidseitig zum Milchmodul je eine Ausgangsleitung (40) für je ein Kaffeemaschinenmodul vorgesehen sein.

## Patentansprüche

1. Milchmodul zur Erzeugung von Milchschaum oder Milchgetränken, zum Einbau in ein Gehäuse einer Kaffeemaschine (1), mit einem Milchbehälter (6), einer Förderpumpe (42) und einer Einrichtung (24) zum Erhitzen der Milch bzw. zum Erzeugen des Milchschaums oder von sonstigen Milchgetränken, wobei das Milchmodul (2) als eine unabhängige Einheit ausgebildet ist, welches unabhängig von einem Kaffeemodul zur Erzeugung von Kaffee in das Gehäuse (3) der Kaffeemaschine (1) einbaubar ist und eine mit einem Kühlaggregat verbundene Kühlkammer (5) für die Aufnahme des Milchbehälters (6), die Förderpumpe (42), eine Einrichtung zur Erzeugung des Dampfs, die Einrichtung (24) zum Milcherhitzen bzw. zum Erzeugen des Milchschaums umfasst, **dadurch gekennzeichnet, dass** das Milchmodul (2) ferner ein Verbindungsmittel umfasst, welches als Steckkupplung (33) ausgebildet und dazu bestimmt ist, dass die erhitzte Milch bzw. der erzeugte Milchschaum durch wenigstens eine Ausgangsleitung (40) bei der Kaffeemaschine zum Kaffeeauslass bei ihr förderbar ist.

2. Milchmodul nach Anspruch 1, **dadurch gekennzeichnet, dass** das Verbindungsmittel durch eine Steckkupplung (33) mit zwei vorzugsweise achsparallel zueinander angeordneten Steckmuffen (36, 37) gebildet ist, in welche die Zu- bzw. Ausgangsleitung (39, 40) dichtend einsteckbar sind.

3. Milchmodul nach Anspruch 2, **dadurch gekennzeichnet, dass** die eine Steckmuffe (36, 37) vorstehend zu einem die Kühlschrankbox (4) umgebenden Einschubgehäuse (2') angeordnet ist, an welche die Ausgangsleitung (40) in der Kaffeemaschine (1) koppelbar ist.

4. Milchmodul nach Anspruch 1, **dadurch gekennzeichnet, dass** ein Reinigungssystem in dem als eine unabhängige Einheit ausgebildeten Milchmodul integriert ist, mittels welchem insbesondere durch die Förderpumpe (42), die Einrichtung (24) zum Erhitzen bzw. zum Erzeugen des Milchschaums sowie die Zu- bzw. Ausgangsleitung (39, 40) ein Reinigungsvorgang ermöglicht wird, zu diesem Zwecke anstelle des Milchbehälters (6) ein Reinigungsbehälter (14) mit einem Reinigungsmittel in die Kühlkammer (5) hineinstellbar ist, wobei in dem Reinigungsbehälter (14) eine Einrichtung (15) mit einem Wasserzufuhrkanal (17), eine definierte Öffnung (16') zur Aufnahme eines Reinigungsmittels, insbesondere einer Tablette, und eine Auslassöffnung (17') enthalten ist, mittels der Wasser durch diesen Zufuhrkanal (17) in diese Öffnung (16') leitbar und darin das Reinigungsmittel, insbesondere die Tablette, aufgelöst und mit dem Wasser emulgiert via die Auslassöffnung (17') in den Reinigungsbehälter (14) einströmbar ist.

5. Milchmodul nach Anspruch 4, **dadurch gekennzeichnet, dass** ein im Bereich der Kühlschrankbox (4) nach vorne bzw. nach hinten schwenkbar gelagerter und nach unten frei hängender Ansaugschlauch (11) vorgesehen ist, der in der nach vorne geschwenkten Position (11') von oben in den Milchbehälter (6) bzw. in den Reinigungsbehälter (14) beim Hineinstellen desselben berührungslos einführbar ist, wobei der Ansaugschlauch (11) durch einen im Bereich der Kühlschrankbox (4) gelagerten und vorzugsweise manuell betätigbaren Schwenkantrieb (12) drehbar ist.

6. Milchmodul nach Anspruch 5, **dadurch gekennzeichnet, dass** der Schwenkantrieb (12) an seiner Gelenkstelle (13) mit einer Einraststelle versehen ist, in welcher der Ansaugschlauch (11) nach Entfernen des Milchbehälters (6) bzw. des Reinigungsbehälters (14) nach vorne aus der Kühlschrankbox (4) arretiert in einer Position (11') herausragt.

7. Milchmodul nach Anspruch 5 oder 6, **dadurch gekennzeichnet, dass**
der Ansaugschlauch (11) durch den Schwenkantrieb (12) beim Hineinstellen des Milchbehälters (6) bzw. Reinigungsbehälters (14) in die Kühlschrankbox (4) einschwenkt, bis er wieder nach unten gerichtet ist, damit er sich mit seinem unteren Ende annähernd bis zum jeweiligen Behälterboden erstreckt.

## Claims

1. A milk module for generating milk foam or milk beverages, for installing into a housing of a coffee machine (1), with a milk container (6), a conveyor pump (42) and a device (24) for heating milk or for generating the milk foam or other milk beverages, wherein the milk module (2) is designed as an independent unit, which is installable into the housing (3) of the coffee machine (1) independent from a coffee module for generating coffee, and which is comprising a cooling chamber (5), connected to a cooling assembly for receiving the milk container (6), the conveyor pump (42), a device for generating the steam, the device (24) for heating milk or for generating the milk foam, **characterised in that**
the milk module (2) comprises moreover a connection means, which is formed by a socket attachment (33) and by which the heated milk or the generated milk foam can be conveyed through at least one discharge line (40) to the coffee outlet in the coffee machine.

2. The milk module according to claim 1, **characterised in that**
the connection means is formed by a socket attachment (33) with two sliding socket joints (36, 37) arranged preferably axially parallel to one another, into which the input or output line (39, 40) are inserted in sealing manner.

3. The milk module according to claim 2, **characterised in that**
the one sliding socket joint (36, 37) is arranged projecting to a rack (2') surrounding the cool box (4), to which rack the output line (40) in the coffee machine (1) can be coupled.

4. The milk module according to claim 1, **characterised in that**
a cleaning system is integrated in the milk module designed as an independent unit, by means of which module a cleaning process is made possible in particular by the conveyor pump (42), the device (24) for heating or for generating the milk foam as well as the input or output line (39, 40), and for this purpose, instead of the milk container (6), a cleaning container (14) with a cleaning agent can be inserted into the cooling chamber (5), wherein a device (15) with a water supply channel (17), a defined opening (16') for receiving a cleaning agent, in particular a tablet, and an outlet opening (17') is contained in the cleaning container (14), by means of which water can be guided through this supply channel (17) into this opening (16') and into which the cleaning agent, in particular the tablet, is dissolved and can flow into the cleaning container (14), emulsified with the water, via the outlet opening (17').

5. The milk module according to claim 4, **characterised in that**
a suction hose (11) is provided in the region of the cool box (4), which suction hose is housed pivotable forwards or backwards, and hanging freely downwards, and which suction hose can be inserted contactlessly in the forward-pivoted position (11') from the top into the milk container (6) or into the cleaning container (14) when inserting same, wherein the suction hose (11) is held rotatable by a swivel drive (12), which can be housed in the region of the cool box (4) and actuated preferably manually.

6. The milk module according to claim 5, **characterised in that**
the swivel drive (12) is provided on its joint (13) with a detent position, in which, after removing the milk container (6) or the cleaning container (14), forwards out of the cool box (4), the suction hose (11) projects locked in one position (11').

7. The milk module according to claim 5 or 6, **characterised in that**,
when inserting the milk container (6) or cleaning container (14) into the cool box (4), the suction hose (11) pivots due to the swivel drive (12) until it is again directed downwards, in order that it extends with its bottom end approximately as far as the respective bottom of the container.

## Revendications

1. Module à lait de production de mousse de lait ou de boissons lactées, à monter dans une enveloppe d'une machine (1) à café, comprenant un récipient (6) à lait, une pompe (42) de circulation et un dispositif (24) de chauffage du lait ou de production de mousse de lait ou d'autres boissons lactées, dans lequel
le module (2) à lait est constitué sous la forme d'une unité indépendante, qui peut, indépendamment d'un module à café de production de café, être monté dans l'enveloppe (3) de la machine (1) à café et comprend une chambre (5) de refroidissement reliée à un groupe de refroidissement pour la réception du récipient (6) à lait, la pompe (42) de circulation, un dispositif de production de vapeur, le dispositif (24) de chauffage du lait ou de production de mousse de lait, **caractérisé en ce que** le module (2) à lait comprend en outre un moyen de liaison, qui est constitué en accouplement (33) à enfichage et qui est destiné à pouvoir transporter le lait réchauffé ou la mousse de lait produite, par au moins un conduit (40) de sortie dans la machine à café, à sa sortie du café.

2. Module à lait suivant la revendication 1, **caractérisé en ce que**
le moyen de liaison est formé d'un accouplement (33) à enfichage ayant deux manchons (36, 37) d'enfichage disposés, de préférence, en ayant entre eux des axes parallèles, dans lesquels le conduit (39) d'arrivée et respectivement le conduit (40) de sortie peuvent être enfichés avec étanchéité.

3. Module à lait suivant la revendication 2, **caractérisé en ce que**
l'un des manchons (36, 37) d'enfichage est monté en saillie d'une boîte (2') à enficher, qui entoure l'armoire (4) de refroidissement et à laquelle le conduit (40) de sortie de la machine (1) à café peut être relié.

4. Module à lait suivant la revendication 1, **caractérisé en ce qu'**
il est intégré un système de nettoyage dans le module à lait constitué sous la forme d'une unité indépendante, module au moyen duquel, en particulier par la pompe (42) de circulation, le dispositif (24) de chauffage ou de production de mousse de lait, ainsi que le conduit (39) d'arrivée et le conduit (40) de sortie, une opération de nettoyage est rendue possible, à cette fin, au lieu du récipient (6) à lait, un récipient (14) de nettoyage ayant un agent de nettoyage, peut être introduit dans la chambre (5) de refroidissement, dans lequel, dans le récipient (14) de nettoyage, est contenu un dispositif (15) ayant un conduit (17) d'apport d'eau, une ouverture (16') définie de réception d'un agent de nettoyage, en particulier d'un comprimé, et une ouverture (17') de sortie, au moyen de laquelle de l'eau peut être envoyée par ce conduit (17) d'apport dans cette ouverture (16') et y dissoudre l'agent de nettoyage, en particulier le comprimé, et, émulsionné par l'eau, peut entrer, par l'intermédiaire de l'ouverture (17') de sortie, dans le récipient (14) de nettoyage.

5. Module à lait suivant la revendication 4, **caractérisé en ce qu'**
il est prévu, dans la partie de l'armoire (4) de refroidissement, monté pivotant vers l'avant ou vers l'arrière et pendant librement vers le bas, un conduit (11) souple d'aspiration, qui, dans la position (11') pivotée vers l'avant, peut être introduit sans contact par le haut dans le récipient (6) à lait ou dans le récipient (14) de nettoyage, lorsque celui-ci est mis, dans lequel le conduit (11) souple d'aspiration peut tourner, par un entraînement (12) de pivotement monté dans la partie de l'armoire (4) de refroidissement et pouvant être actionné, de préférence manuellement.

6. Module à lait suivant la revendication 5, **caractérisé en ce que**
l'entraînement (12) de pivotement est pourvu, à son point (13) d'articulation, d'un point d'encliquetage, dans lequel le conduit (11) souple d'aspiration est, après retrait du récipient (6) à lait ou du récipient (14) de nettoyage, en saillie vers l'avant de l'armoire (4) de refroidissement en étant arrêté dans une position (11').

7. Module à lait suivant la revendication 5 ou 6, **caractérisé en ce que**
le conduit (11) souple d'aspiration pivote, par le dispositif (12) d'entraînement, lors de la mise du récipient (6) à lait ou du récipient (14) de nettoyage dans l'armoire (4) de refroidissement, jusqu'à être à nouveau dirigé vers le bas, afin qu'il s'étende par son extrémité inférieure à peu près jusqu'au fond du récipient respectif.
